# EUROPEAN PATENT SPECIFICATION

(11) **EP 1 150 088 B1**
(45) Date of publication and mention of the grant of the patent: **05.11.2008**
(21) Application number: 00307661.9
(22) Date of filing: 05.09.2000
(51) Int. Cl.: F28F 9/04

(54) **Fitting/manifold assembly and method for a heat exchanger**
Sammelrohranordnung mit Verbindungselement und Verfahren zur Zusammenstellung eines Wärmetauschers
Ensemble raccord / collecteur et méthode d'assemblage pour un échangeur de chaleur

(30) Priority: 13.03.2000 US 524115
(43) Date of publication of application: 31.10.2001
(73) Proprietor: Modine Manufacturing Company, Racine Wisconsin 53403 (US)
(72) Inventor: Hunzinger, Thomas A., Racine, Wisconsin 53406 (US); Nakayama, Ken, Racine, Wisconsin 53402 (US)
(74) Representative: Parry, Christopher Stephen

(56) References cited:
- DE-C- 525 847
- FR-A- 2 250 087
- GB-A- 248 713
- US-A- 3 027 142

## Description

### FIELD OF THE INVENTION

The present invention relates to heat exchangers, and more particularly to a fitting/manifold assembly and method for a heat exchanger.

### BACKGROUND OF THE INVENTION

It is known in the heat exchanger art to use a fitting attached to a manifold forming part of the heat exchanger to define either an inlet, an outlet, or a jump tube connector for the manifold. Such fittings are often assembled to a manifold by first positioning the fitting relative to the manifold so that an opening in the fitting is aligned with an opening in the manifold. It is known to align the openings by providing a nipple on either the fitting or the manifold and then inserting the nipple in an opening formed in the component without the nipple. After the openings are aligned, the fitting is skived or tac-welded to the manifold to prevent relative movement therebetween. The fitting/manifold assembly then undergoes a bonding process, such as brazing, to form a sealed joint between the fitting and the manifold. While these methods of assembly may work for their intended purpose, there is always room for improvement.

For example, the set-up for the skiving and/or the tac-welding can be time-consuming, and the tac-weld can alter the material properties of the fitting and/or manifold surrounding the weld.

US-A-5,151,157 discloses heat exchanger apparatus comprising a main heat exchanger having a water box with a secondary heat exchanger inside the water box. The secondary heat exchanger including two coupling tubes passing sealingly through a wall of the water box. The secondary heat exchanger is secured to the water box by means of these coupling tubes. Each coupling tube is carried on the secondary heat exchanger by being introduced into an access hole in the wall and being secured in a base ring of the secondary heat exchanger. Each coupling tube has a deformable terminal portion which is upset so as to expand it radially in a hole formed in the base ring.

US 2,269,895 discloses a method of securing a nipple into the wall of a pipe. Part of the nipple is inserted into a hole in the pipe and is then expanded by a tool passing through the nipple to secure the nipple to the pipe.

### SUMMARY OF THE INVENTION

It is a principal object of the invention to provide a new and improved fitting/manifold assembly and a method for assembling the same.

One aspect of the invention provides a method of positioning a fitting relative to a manifold of a heat exchanger, the method comprising the steps of: providing a manifold including a wall having an aperture therethrough; providing a fitting including a body, a nipple extending from the body and having an interior surface, and an opening extending through the body to allow access to the interior surface; inserting the nipple into the aperture from one side of the wall so that the body of the fitting is on one side of the wall and a portion of the nipple is on the other side of the wall; deforming the interior surface of the nipple with a deforming tool inserted through said opening in said body to enlarge said portion to a shape that restricts retraction of said nipple from said aperture; and bonding the fitting to the manifold to form a sealed joint between the nipple and the aperture.

According to one preferred aspect of the invention, the method further includes the step of brazing the fitting to the manifold.

According to another preferred aspect of the invention, the opening has a central axis and the deforming step includes forcing the tool along the axis.

According to yet another preferred aspect of the invention, the interior surface is a nominally frustoconical surface and the deforming step includes deforming the frustoconical surface into a nominally cylindrical surface.

Another aspect of the invention provides a fitting/manifold assembly for a heat exchanger, the assembly comprising: a manifold including a wall, the wall having a thickness and an aperture extending through the thickness from an exterior of the manifold to an interior of the manifold, the aperture having a predetermined shape; and a fitting including a body and a deformable nipple extending from the body, the nipple having an exterior surface, an interior surface, and a portion extended from the body a distance greater than said thickness of said wall, the nipple being deformable from a first shape to a second shape, in the first shape the exterior surface of the nipple nominally conforms to the predetermined shape of the aperture to allow the nipple to be freely inserted into the aperture with the portion extending through the wall into the interior of the manifold, in the second shape said portion is enlarged to retain the nipple in the aperture, the fitting further including an opening extending through the body to allow access to the interior surface of the nipple by a deforming tool inserted through the opening to deform the nipple from the first shape to the second shape; wherein the fitting is bonded to the manifold to form a sealed joint between the nipple and the aperture with the nipple deformed to the second stage.

Other objects, features and advantages of the invention will be apparent from the following detailed description taken in conjunction with the accompanying drawings, the above summary, and the appended claims.

### BRIEF DESCRIPTION OF THE DRAWINGS

Fig. 1 is a front elevation of a heat exchanger including a fitting/manifold assembly made according to the present invention;
Fig. 2 is an exploded, section view taken along line 2-2 in Fig. 1;
Fig. 3 is a section view taken along 2-2 in Fig. 1;
Fig. 4 is a view taken from line 4-4 in Fig. 3;
Fig. 5 is an enlarged view of the area indicated by line 5-5 in Fig. 3 showing a fitting in a first state;
Fig. 6 is view similar to Fig. 5 showing the fitting in a second state.
Fig. 7 is a perspective view of another embodiment of the fitting shown in Fig. 1;
Fig. 8 is a view taken along line 8-8 in Fig. 7;
Fig. 9 is a side elevation of the fitting in Fig. 5;
Fig. 10 is a top view of the fitting in Fig. 5;
Fig. 11 is a view similar to Fig. 8 illustrating the shape of an extrusion that can be used to manufacture the fitting shown in Fig. 7;
Fig. 12 is a perspective view of yet another embodiment of the fitting shown in Fig. 1;
Fig. 13 is a side elevation of the fitting shown in Fig. 12;
Figs. 14 and 15 are views of a tool used in connection with the fitting shown in Figs. 12 and 13; and
Fig. 16 is an enlarged view of the fitting shown in Figs. 12 and 13 showing the fitting in a deformed state.

### BRIEF DESCRIPTION OF THE PREFERRED EMBODIMENTS

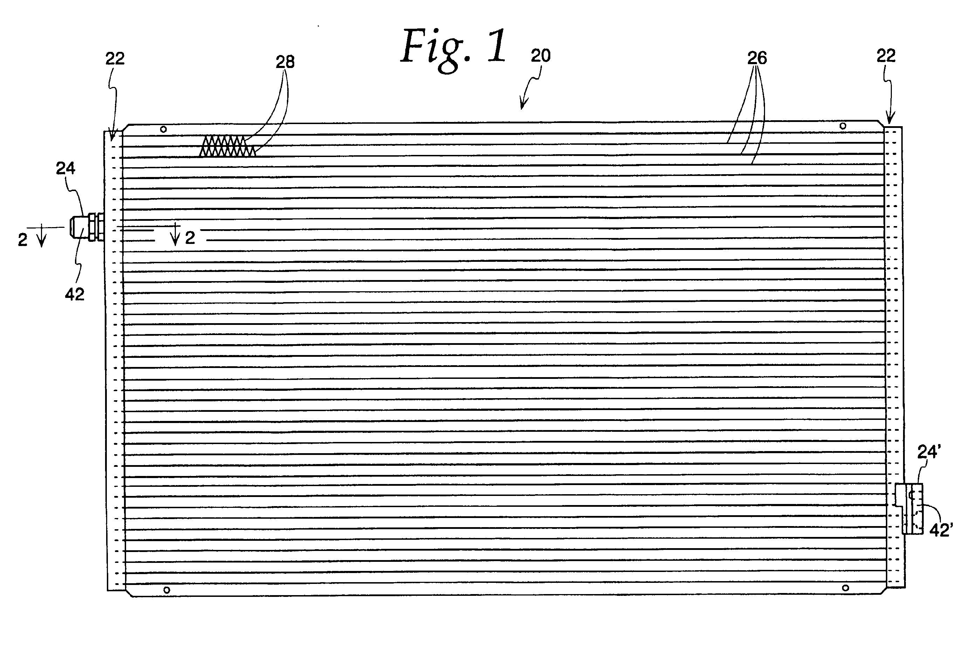

Several exemplary embodiments of a fitting/manifold assembly are illustrated in the drawings in connection with a parallel flow heat exchanger 20 including a pair of elongate manifolds in the form of cylindrical, tubular headers 22; one or more fittings 24 attached to at least one of the headers 22; a plurality of multi-port, flattened tubes 26 extending between the headers 22; and serpentine fins 28 (shown schematically in Fig. 1) extending between adjacent ones of the tubes 24. However, it should be understood that the invention may find utility in other forms of heat exchangers utilizing other types of manifolds, fins, and heat exchanger tubes or conduits, such as for example, cylindrical heat exchange tubes, plate fins, serpentine-type heat exchangers, etc. Moreover, the manifolds need not be cylindrical in cross-section and may be of a multi-piece construction, such as a tank connected to a header. Accordingly, no limitation for use for the specific form of heat exchanger or manifold is intended except insofar as expressly stated in the appended claims.

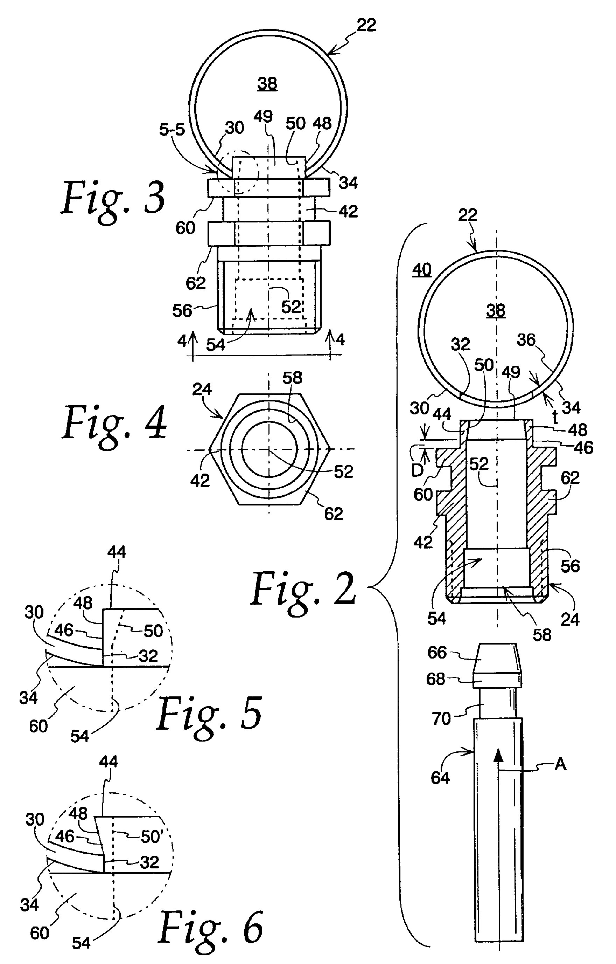

With reference to Fig. 2, the manifold 22 includes a wall 30 having an aperture 32 in the form of a circular hole extending through the wall from one side 34 of the wall to the other side 36 of the wall 30 over a thickness t of the wall 30. The wall 30 separates an interior volume 38 in the manifold 22 from the exterior 40.

The fitting 24 includes a body 42 and a nipple 44 having a nominally cylindrical exterior surface 46 extending from the body 42. A portion 48 of the nipple 44 is extended from the body 42 by a distance D that is greater than the thickness t of the wall. The end of the nipple 44 includes a nominally circular port or opening 49. The cylindrical exterior surface 46 nominally conforms to the circular shape of the aperture 32 to allow the nipple 44 to be freely inserted into the aperture 32 so that the portion 48 extends into the interior volume 38 of the manifold 22, as shown in Fig. 3. The nipple 44 includes a nominally frustoconical shaped interior surface 50 that converges as it extends away from the body 42 to the port 49. The cylindrical exterior surface 46, the port 49, and frustoconical shaped interior surface 50 are nominally centered on an axis 52. The body 42 includes a nominally cylindrical shaped opening 54 that extends through the body 42 to allow access to the interior surface 50. The opening 54 is nominally centered on the axis 52. In the embodiment shown in Figs. 2 and 3, the body 42 further includes an exterior thread 56 that allows a tube or conduit (not shown) to be connected with a port 58 formed in the opening 54. A pair of hexagonal shaped shoulders 60 and 62 are provided adjacent the nipple 44 and the thread 56, respectively. The shoulders 60 and 62 can be engaged by a tool, such as a wrench, (not shown) to react torque when a connector is tightened onto the thread 56. The thread 56 and shoulders 60 and 62 are nominally centered on the axis 52.

A substantially cylindrical shaped staking tool 64 is provided for connecting the fitting 24 to the header 22. The tool 64 includes a nominally frustoconical shaped end 66 that is backed by a nominally cylindrical land 68 and a relief 70.

To connect the fitting 24 to the manifold 22, the nipple 44 is inserted into the aperture 32 so that the portion 48 extends through the wall 30 into the interior volume 38 of the manifold 22 as shown in Fig. 3. The staking tool 64 is then inserted through the opening 54 in the direction of arrow A along the axis 52 so that the frustoconical end 66 engages the frustoconical interior surface 50. The staking tool 64 is then forced in the direction of arrow A along the axis 52 to deform the interior surface 50 through progressive engagement of the conical end 66 and the cylindrical land 68 with the surface 50. This operation results in the frustoconical interior surface 50 shown in Fig. 5 being permanently deformed into a nominally cylindrical surface 50' as shown in Fig. 6. The deformation of the interior surface 50 also permanently deforms the exterior surface 46 so that it flares out into a nominally frustoconical shape, as shown in Fig. 6. The resulting enlargement of the portion 48 restricts retraction of the nipple 44 from the aperture 32 because the portion 48 is larger than the aperture 32.

As best seen in Fig. 6, it may be desirable in some applications for the aperture 32, the exterior surface 46, the interior surface 50, the conical end 66 and the land 68 to be sized relative to each other so that, after the end portion 48 is deformed by the staking tool 64, the exterior surface 46 has a tight or interference fit against the periphery of the aperture 32 and the wall 30 is trapped between the shoulder 60 and the surface 48.

After the fitting 24 is positioned relative to the manifold 22 by deformation of the end portion 48 with the tool 64, the fitting 24 can be bonded to the manifold 22 to form a sealed joint between the nipple 44 and the aperture 32 using a suitable bonding technique, such as a suitable brazing process.

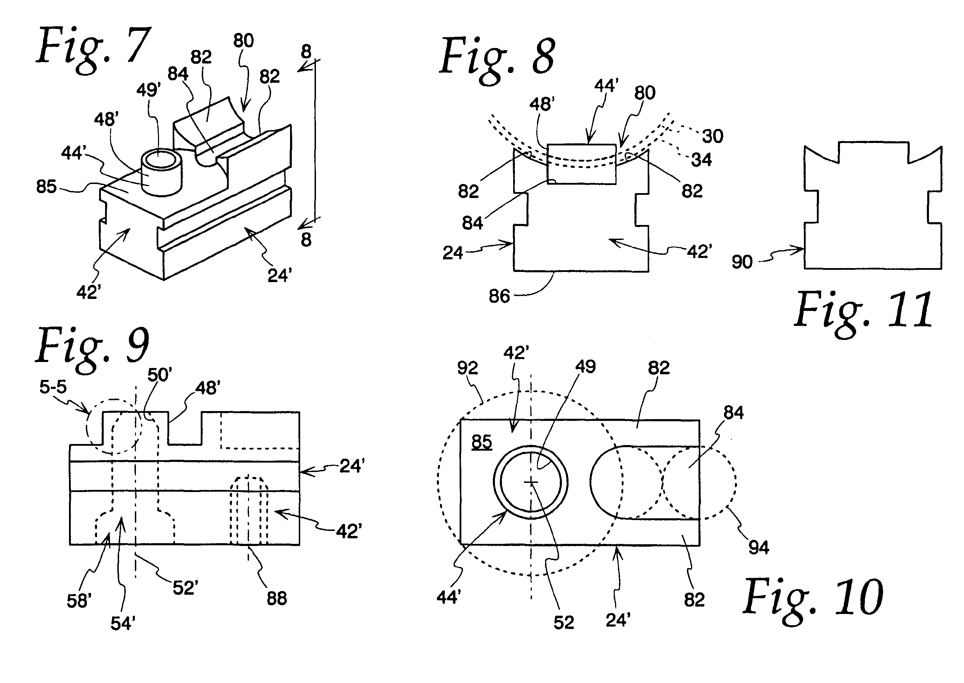

Another embodiment of the fitting 24 is shown in Figs. 7-10 and is identified as 24'. The nipple 44' of this embodiment is identical to the nipple 44 of the embodiment shown in Fig. 1, including the port 49, the portion 48, and the interior and exterior surfaces 46 and 50. However, the body 42' of the embodiment shown in Fig. 4 is different than the body 42 shown in Fig. 1. More specifically, the body 42' has a generally rectangular box shape with a saddle shaped portion 80 having a pair of surfaces 82 that nominally conform to the exterior shape of the wall 30, as shown by the phantom lines in Fig. 8. The surfaces 82 are spaced by a channel 84. A nominally flat surface 85 is provided at the intersection between the body 42' and the nipple 44'. As best seen in Fig. 9, a nominally flat surface 86 is provided on the side of the body 42' opposite from the nipple 44' and the saddle 80. A threaded hole 88 is provided in the surface 86 for engagement with a fastener (not shown) of a connector (not shown) that connects a tube or conduit with the nominally cylindrical port 58' formed in the nominally cylindrical opening 54'.

While the embodiment of the fitting 24' shown in Figs. 7-10 can be formed by any suitable manufacturing method, such as by casting, injection molding, metal injection molding, or machining, it is preferred that the fitting 24' be machined from an extrusion having the extruded shape 90 shown in Fig. 11. The nipple 44' and the channel 84 can then be machined using a circular cutter and an end mill cutting tool as shown by the phantom lines 92 and 94 in Fig. 10.

The fitting 24' is connected to the manifold 22 using the tool 64 and the method described above in connection with the fitting 24. As with the fitting 24, after the fitting 24' is positioned relative to the manifold 22 by deformation ofthe portion 48' with the tool 64, the fitting 24' can be bonded to the manifold 22 to form a sealed joint between the nipple 44' and the aperture 32 using a suitable bonding technique, such as a suitable brazing process. Additionally, the surfaces 82 of the saddle 80 are bonded to the surface 34 of the manifold 22 using a suitable bonding technique, such as a suitable brazing process. It may be preferred in some applications for the bonding of the surfaces 82 and 34 and the bonding of the nipple 44 and the aperture 32 to occur at substantially the same time using the same bonding technique.

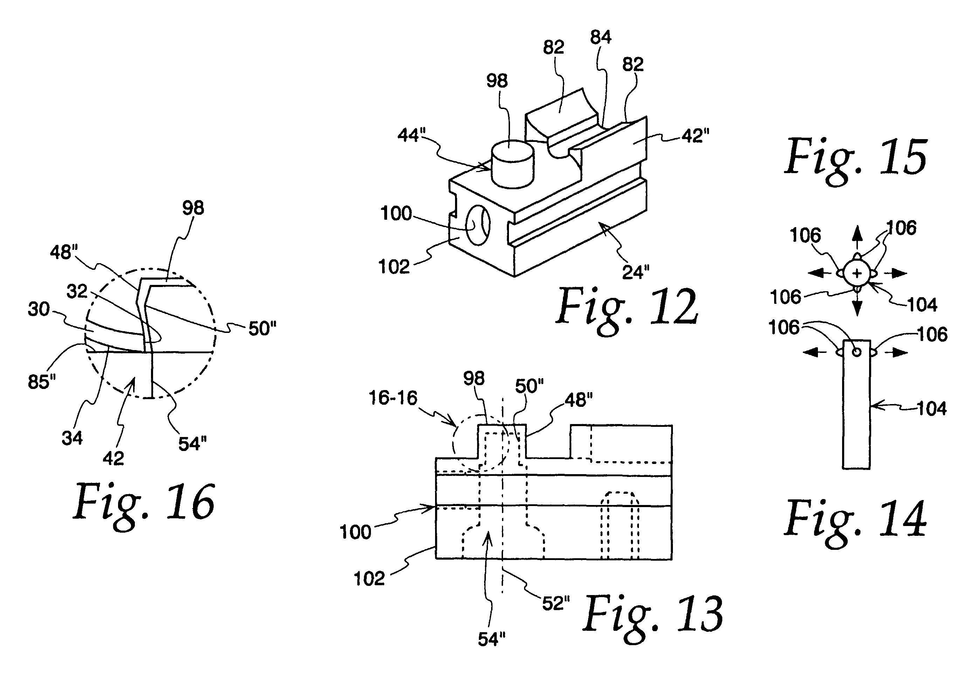

Fig. 12 is a prospective view of yet another embodiment of the fitting 24. This embodiment is identified as 24" and is identical to the embodiment 24' shown in Figs. 5-8, except for two modifications to the nipple 44 and one modification to the body 42. More specifically, as best seen in Fig. 13, the nipple 44" of the fitting 24" is provided with a closed end 98, rather than the port 49' shown in Figs. 7-10. Additionally, as best seen in Fig. 13, the interior surface 50" is nominally cylindrical in its undeformed state, rather then frustoconical shaped surface 50' shown in Figs. 7-10. Finally, a cylindrical opening 100 is provided through an end surface 102 of the body 42" and connects to the opening 54. The opening 100 is adapted to receive a jumper tube (not shown) that can be bonded in the opening 100 using any suitable process, such as a suitable brazing process to form a sealed joint. As shown in Figs. 14 and 15, a staking tool 104 is provided to permanently deform the end portion 48". Specifically, the staking tool 104 includes four punches 106 that are mounted in the staking tool for radially outward movement in a direction nominally perpendicular to the axis 52". After the nipple 44" is inserted into the aperture 32, the staking tool 104 is inserted into the opening 54" and the four punches 106 are forced radially outward to permanently deform the interior surface 50" into the shape shown in Fig. 16. The punches 106 are then retracted radially inwardly and the staking tool 104 removed from the opening 54". The staking tool 104 is preferred for the fitting 24" because the closed end 98 of the nipple 44 " would prevent movement of the end 66 of the tool 64 past the surface 50". The fitting 24" can then be bonded to the manifold using the same method as described above for the fitting 22'.

While it is preferred that the fitting 24 and the manifold 22 be formed from aluminum, any suitable, permanently deformable material can be used for the fitting 24 and any suitable material can be used for the manifold 22 for all of the embodiments of the fitting 24 shown in Figs. 1-16, as dictated by the requirements of each particular application. Further, while it is preferred that the aperture 32 be circular and the nipple 44 have a cylindrical exterior surface 46, it may be advantageous in some applications for other shapes to be used for these features. Additionally, while it is preferred that the aperture 32 and the surface 46 have nominally conforming shapes, it may be advantageous in some applications for at least portions of the aperture 32 and the surface 46 to be nonconforming to each other.

For all of the embodiments of the fitting 24 shown in Fig. 1-16, it should be appreciated that, by deforming the interior surface 50 with a deforming tool 64, 104 inserted through the body 42 of the fitting 24 on one side of the manifold 22, the fitting 24 can be connected to a manifold 22 without accessing the fitting 24 from the opposite side of the manifold 22.

## Claims

1. A method of positioning a fitting (24) relative to a manifold (22) of a heat exchanger, the method comprising the steps of:
providing a manifold including a wall (30) having an aperture (32) therethrough;
providing a fitting including a body (42), a nipple (44) extending from the body and having an interior surface (50), and an opening (54) extending through the body to allow access to the interior surface;
inserting the nipple (44) into the aperture (32) from one side of the wall so that the body of the fitting is on one side of the wall and a portion (48) of the nipple is on the other side of the wall;
deforming the interior surface (50) of the nipple with a deforming tool (64) inserted through said opening in said body to enlarge said portion to a shape that restricts retraction of said nipple from said aperture; and
bonding the fitting (24) to the manifold (22) to form a sealed joint between the nipple and the aperture.

2. The method of claim 1, wherein the bonding of the fitting to the manifold is by brazing.

3. The method of claim 1 wherein said opening has a central axis (52) and said deforming step comprises forcing said tool along said axis.

4. The method of claim 1 wherein said interior surface (50) is a nominally frustoconical surface and said deforming step comprises deforming said frustoconical surface into a nominally cylindrical surface.

5. The method of claim 1 wherein said deforming step comprises enlarging said nipple (44) to create an interference fit between said nipple and said aperture.

6. A fitting/manifold assembly for a heat exchanger, the assembly comprising:
a manifold (22) including a wall (30), the wall having a thickness and an aperture (32) extending through the thickness from an exterior of the manifold to an interior of the manifold, the aperture having a predetermined shape; and
a fitting (24) including a body (42) and a deformable nipple (44) extending from the body, the nipple having an exterior surface (46), an interior surface (50), and a portion (48) extended from the body a distance greater than said thickness of said wall, the nipple being deformable from a first shape to a second shape, in the first shape the exterior surface of the nipple nominally conforms to the predetermined shape of the aperture to allow the nipple to be freely inserted into the aperture with the portion extending through the wall into the interior of the manifold, in the second shape said portion is enlarged to retain the nipple in the aperture, the fitting further including an opening (54) extending through the body to allow access to the interior surface of the nipple by a deforming tool (64) inserted through the opening to deform the nipple from the first shape to the second shape; wherein the fitting is bonded to the manifold to form a sealed joint between the nipple and the aperture with the nipple deformed to the second state.

7. The manifold assembly of claim 6 wherein the aperture (32) is nominally circular and the exterior surface (46) of the nipple (44) is nominally cylindrical.

8. The manifold assembly of claim 6 wherein the interior surface (50) of the nipple (44) has a nominally frustoconical shape.

9. The manifold assembly of claim 6 wherein the nipple includes an open end (49).

10. The manifold assembly of claim 6 wherein the nipple includes a closed end (98).

## Patentansprüche

1. Verfahren zum Positionieren eines Verbindungselements (24) bezüglich eines Sammelrohrs (22) eines Wärmetauschers, wobei das Verfahren folgende Schritte umfasst:
Bereitstellen eines Sammelrohrs einschließlich einer Wand (30) mit einer Durchgangsöffnung (32);
Bereitstellen eines Verbindungselements, das einen Körper (42) umfasst, wobei sich ein Nippel (44) aus dem Körper erstreckt und eine Innenfläche (50) aufweist und wobei sich eine Öffnung (54) durch den Körper erstreckt, um Zugang zur Innenfläche zu gestatten;
Einschieben des Nippels (44) in die Öffnung (32) von einer Seite der Wand, sodass sich der Körper des Verbindungselements auf einer Seite der Wand befindet und sich ein Teil (48) des Nippels auf der anderen Seite der Wand befindet;
Verformung der Innenfläche (50) des Nippels mit einem Formwerkzeug (64), das durch besagte Öffnung in besagtem Körper eingeschoben wird, um besagten Teil zu einer Form zu vergrößern, die Zurückziehen des besagten Nippels aus der besagten Öffnung einschränkt; und
Verbinden des Verbindungselements (24) mit dem Sammelrohr (22), um eine abgedichtete Verbindung zwischen dem Nippel und der Öffnung zu bilden.

2. Verfahren nach Anspruch 1, wobei das Verbinden des Verbindungselements mit dem Sammelrohr durch Hartlöten geschieht.

3. Verfahren nach Anspruch 1, wobei besagte Öffnung eine mittige Achse (52) aufweist und besagter Verformungsschritt das Forcieren des besagten Werkzeugs entlang besagter Achse umfasst.

4. Verfahren nach Anspruch 1, wobei besagte Innenfläche (50) eine nominell kegelstumpfförmige Fläche ist und besagter Verformungsschritt das Verformen besagter kegelstumpfartigen Fläche in eine nominell zylindrische Fläche umfasst.

5. Verfahren nach Anspruch 1, wobei besagter Verformungsschritt das Vergrößern besagten Nippels (44) umfasst, um einen Festsitz zwischen besagtem Nippel und besagter Öffnung zu schaffen.

6. Sammelrohranordnung mit Verbindungselement für einen Wärmetauscher, wobei die Anordnung umfasst:
Ein Sammelrohr (22) einschließlich einer Wand (30), wobei die Wand eine Dicke aufweist und sich eine Öffnung (32) durch die Dicke von einer Außenseite des Sammelrohrs zu einer Innenseite des Sammelrohrs erstreckt, wobei die Öffnung eine vorbestimmte Form hat; und
ein Verbindungselement (24) einschließlich eines Körpers (42) und eines verformbaren Nippels (44), der sich aus dem Körper erstreckt, wobei der Nippel eine Außenfläche (46), eine Innenfläche (50) und einen Teil (48) aufweist, der sich aus dem Körper um eine Distanz erstreckt, die größer als die Dicke besagter Wand ist, wobei der Nippel aus einer ersten Form zu einer zweiten Form verformbar ist, wobei die Außenfläche des Nippels in der ersten Form nominell der vorbestimmten Form der Öffnung entspricht, um das ungehinderte Einschieben des Nippels in die Öffnung zu gestatten, wobei sich der Teil durch die Wand in den Innenraum des Sammelrohrs erstreckt, wobei besagter Teil in der zweiten Form ausgeweitet wird, um den Nippel in der Öffnung festzuhalten, wobei das Verbindungselement weiter eine Öffnung (54) umfasst, die sich durch den Körper erstreckt, um Zugang zur Innenfläche des Nippels mit einem Formwerkzeug (64) zu erlauben, das durch die Öffnung geschoben wird, um den Nippel aus der ersten Form in die zweite Form zu verformen; wobei das Verbindungselement mit dem Sammelrohr verbunden wird, um eine abgedichtete Verbindung zwischen dem Nippel und der Öffnung zu bilden, wobei der Nippel in den zweiten Zustand verformt ist.

7. Sammelrohranordnung nach Anspruch 6, wobei die Öffnung (32) nominell rund ist und die Außenfläche (46) des Nippels (44) nominell zylindrisch ist.

8. Sammelrohranordnung nach Anspruch 6, wobei die Innenfläche (50) des Nippels (44) eine nominell kegelstumpfartige Form aufweist.

9. Sammelrohranordnung nach Anspruch 6, wobei der Nippel ein offenes Ende (49) umfasst.

10. Sammelrohranordnung nach Anspruch 6, wobei der Nippel ein geschlossenes Ende (98) umfasst.

## Revendications

1. Procédé de positionnement d'un raccord (24) par rapport à un collecteur (22) d'un échangeur de chaleur, ce procédé comprenant les étapes consistant à :
fournir un collecteur comprenant une paroi (30) ayant une ouverture (32) à travers lui ;
fournir un raccord comprenant un corps (42), un mamelon (44) s'étendant depuis le corps et ayant une surface intérieure (50), et une ouverture (54) s'étendant à travers le corps pour permettre l'accès à la surface intérieure ;
l'insertion du mamelon (44) dans l'ouverture (32) depuis un côté de la paroi de façon à ce que le corps du raccord soit sur un côté de la paroi et une partie (48) du mamelon soit sur l'autre côté de la paroi ;
la déformation de la surface intérieure (50) du mamelon avec un outil de déformation (64) inséré à travers ladite ouverture dans ledit corps pour agrandir ladite partie dans une forme qui restreint la rétraction dudit mamelon de ladite ouverture ; et
le liaisonnement du raccord (24) au collecteur (22) pour former un joint étanche entre le mamelon et l'ouverture.

2. Procédé selon la revendication 1, dans lequel le liaisonnement du raccord au collecteur est fait par brasage.

3. Procédé selon la revendication 1, dans lequel ladite ouverture a un axe central (52) et ladite étape de déformation comprend l'enfoncement dudit outil le long dudit axe.

4. Procédé selon la revendication 1, dans lequel ladite surface intérieure (50) est une surface nominalement frustoconique et ladite étape de déformation comprend la déformation de ladite surface frustoconique en une surface nominalement cylindrique.

5. Procédé selon la revendication 1, dans lequel ladite étape de déformation comprend l'agrandissement dudit mamelon (44) pour créer un ajustement avec serrage entre ledit mamelon et ladite ouverture.

6. Ensemble raccord/collecteur pour un échangeur de chaleur, cet ensemble comprenant :
un collecteur (22) comprenant une paroi (30), cette paroi ayant une épaisseur et une ouverture (32) s'étendant à travers l'épaisseur depuis un extérieur du collecteur jusqu'à un intérieur du collecteur, cette ouverture ayant une forme prédéterminée ; et
un raccord (24) comprenant un corps (42) et un mamelon déformable (44) s'étendant depuis le corps, ce mamelon ayant une surface extérieure (46), une surface intérieure (50), et une partie (48) s'étendant depuis le corps sur une distance plus grande que ladite épaisseur de ladite paroi, ce mamelon étant déformable d'une première forme en une deuxième forme, dans la première forme, la surface extérieure du mamelon se conforme nominalement à la forme prédéterminée de l'ouverture pour permettre au mamelon d'être inséré librement dans l'ouverture avec la partie s'étendant à travers la paroi dans l'intérieur du collecteur, dans la deuxième forme, ladite portion est agrandie afin de retenir le mamelon dans l'ouverture, le raccord comprenant en outre une ouverture (54) s'étendant à travers le corps pour permettre l'accès à la surface intérieure du mamelon par un outil de déformation (64) inséré à travers l'ouverture afin de déformer le mamelon de la première forme en la deuxième forme ; dans lequel le raccord est liaisonné au collecteur de façon à former un joint étanche entre le mamelon et l'ouverture avec le mamelon déformé dans le deuxième état.

7. Ensemble collecteur selon la revendication 6, dans lequel l'ouverture (32) est nominalement circulaire et la surface extérieure (46) du mamelon (44) est nominalement cylindrique.

8. Ensemble collecteur selon la revendication 6, dans lequel la surface intérieure (50) du mamelon (44) a une forme nominalement frustoconique.

9. Ensemble collecteur selon la revendication 6, dans lequel le mamelon comprend une extrémité ouverte (49).

10. Ensemble collecteur selon la revendication 6, dans lequel le mamelon comprend une extrémité fermée (98).
